# EUROPÄISCHE PATENTSCHRIFT

(11) **EP 2 054 260 B1**
(45) Veröffentlichungstag und Bekanntmachung des Hinweises auf die Patenterteilung: **04.09.2013**
(21) Anmeldenummer: 08701180.5
(22) Anmeldetag: 23.01.2008
(51) Int. Cl.: B60N 2/07, B60N 2/18, B60N 2/22, B60N 2/42, B60N 2/50

(54) **FAHRZEUGSITZ, INSBESONDERE NUTZFAHRZEUGSITZ**
VEHICLE SEAT, IN PARTICULAR COMMERCIAL VEHICLE SEAT
SIÈGE DE VÉHICULE, NOTAMMENT SIÈGE DE VÉHICULE UTILITAIRE

(30) Priorität: 21.02.2007 DE 102007009170; 13.07.2007 DE 202007009795 U
(43) Veröffentlichungstag der Anmeldung: 06.05.2009
(73) Patentinhaber: KEIPER GmbH & Co. KG, 67657 Kaiserslautern (DE)
(72) Erfinder: HASSLER, Klaus, 67735 Mehlbach (DE); NISSEN, Rüdiger, 66629 Freisen-Oberkirchen (DE); SCHWEIZER, Thorsten, 66955 Pirmasens (DE); GUNDALL, Thomas, 66851 Queidersbach (DE); KLEIN, Harald, 66909 Matzenbach (DE); WEBER, Thomas, 67659 Kaiserslautern (DE)
(74) Vertreter: Kalkoff & Partner
(86) Internationale Anmeldenummer: PCT/EP2008/000478
(87) Internationale Veröffentlichungsnummer: WO 2008/101579

(56) Entgegenhaltungen:
- WO-A-02/34563
- FR-A- 2 433 433
- JP-A- 56 131 432
- US-A- 6 030 043
- US-B1- 6 276 650

## Beschreibung

Die Erfindung betrifft einen Fahrzeugsitz, insbesondere Nutzfahrzeugsitz, mit den Merkmalen des Oberbegriffs des Anspruches 1.

Höheneinstellbare Fahrzeugsitze können Viergelenke mit Schwingen oder alternativ ein Scherengestell aufweisen, wie es bekanntermaßen für Nutzfahrzeuge eingesetzt wird. Während in einer einfachen Ausführung der Sitzrahmen ein Bestandteil des Scherengestells ist oder fest mit diesem verbunden ist, kann zur Erhöhung des Sitzkomforts der Sitzrahmen relativ zum Scherengestell neigungseinstellbar sein, beispielsweise indem der Sitzrahmen am Scherengestell angelenkt ist und ein Lineareinsteller oder ein Getriebe den Sitzrahmen relativ zum Scherengestell schwenkt. Ein derartiger Fahrzeugsitz der eingangs genannten Art ist beispielsweise in der JP 56-131432 A und in der US 3,977,725 A offenbart. Die Schwenkachse des Sitzrahmens ist am hinteren Ende vorgesehen. Eine motorische Neigungseinstellung für einen Fahrzeugsitz unter Verwendung von Kniehebeln zeigen beispielsweise die US 6,276,650 B 1 und die FR 2 433 433 A.

Ein Fahrzeugsitz mit Fangelementen, welche im Crashfall oder Missbrauchsfall einen weiteren Weg für den Kraftfluss schaffen, ist aus der US 6,276,650 B 1 bekannt. Der Sitzrahmen ist beidseitig (unter Bildung von Viergelenken) mittels Schwingen höheneinstellbar an einer aus Sitzschienen und Adaptern bestehenden Basis angelenkt. Wenn im Falle eines Heckcrashs mittels der Lehne ein Drehmoment am Sitzrahmen angreift, schwenken die hinteren Schwingen nach hinten, so dass ein vorspringendes Fangelement an der Basis mit einem als Vertiefung ausgebildeten Fangelement am Sitzrahmen in Eingriff kommt. Eine Zusatzverrastung mit Zahnsegmenten ist aus der WO 02/34563 A1 bekannt. Durch Benutzung ist ferner ein Fanggurt bekannt, welcher um den Sitzrahmen geschlungen und an der Basis des Gestells befestigt ist.

Es sind auch Fangelemente bekannt, welche auf einen Zug am Gurtschloss reagieren, beispielsweise aus der JP 1-136030 U, der DE 199 11 786 A1 oder der DE 44 08 219 A1. Fangelemente können auch gegen eine Aufschälen von Schienen schützen, wie beispielsweise in der JP 9-226427 A offenbart.

Der Erfindung liegt die Aufgabe zu Grunde, einen Fahrzeugsitz der eingangs genannten Art weiter zu verbessern. Diese Aufgabe wird erfindungsgemäß durch einen Fahrzeugsitz mit den Merkmalen des Anspruches 1 gelöst. Vorteilhafte Ausgestaltungen sind Gegenstand der Unteransprüche.

In einem Crashfall oder Missbrauchsfall werden die Kräfte nicht nur über die Anlenkstelle des Sitzrahmens am Scherengestell und den Lineareinsteller oder das Getriebe geleitet, sondern parallel dazu über die Fangelemente, welche im Normalfall voneinander beabstandet sind und nach Annäherung zusammenwirken unter Schaffung eines weiteren Weges für den Kraftfluss. Damit erfolgt eine bessere Lastübertragung vom Sitzrahmen an das Scherengestell und/oder den Unterbau, was eine geringere Dimensionierung der im Kraftflusses parallel zu den Fangelementen liegenden Bauteile erlaubt und dadurch insgesamt die Herstellungskosten und das Gewicht verringert. Dieser Vorteil wird vorzugsweise dadurch verstärkt, dass die Fangelemente die Abstützlänge vergrößern, indem die Fangelemente beabstandet von der Anlenkstelle vorgesehen sind, bei einem mittig angelenkten Sitzrahmen beispielsweise am Ende desselben. Eines der Fangelemente ist erfindungsgemäß als Berandung einer Öffnung oder dergleichen ausgebildet.

Ansonsten sind Fangelemente in einfach herzustellenden Ausführungen als Anschlagwinkel, Zähne, Haken, Bolzen, Scheibe oder dergleichen ausgebildet. Die Fangelemente können zusätzlich seitlich zur Hauptrichtung des Kraftflusses miteinander oder mit den ihnen zugeordneten Rahmen oder Gestellen zusammenwirken, beispielsweise wenn Ausweichbewegungen verhindert werden sollen. Hierfür können Seitensicherungen in Form von Scheiben oder dergleichen vorgesehen sein.

Das Getriebe, das den Sitzrahmen relativ zum Scherengestell schwenkt, ist vorzugsweise eine Hebelgetriebe, beispielsweise ein Dreigelenk, und weist vorzugsweise einen Neigungseinstellbeschlag oder eine gleichwirkende Vorrichtung auf. Das Scherengestell weist vorzugsweise einen Unterrahmen, einen oberhalb davon angeordneten Oberrahmen und wenigstens ein Paar gekreuzter Schwingen auf, mittels welcher die Höhe des Oberrahmens über dem Unterrrahmen einstellbar ist. Der Oberrahmen ist der mit dem Sitzrahmen zusammenwirkende Bestandteil des Scherengestells, d.h. am Oberrahmen ist sowohl der Sitzrahmen direkt angelenkt als auch der Lineareinsteller oder das Getriebe, welche den Sitzrahmen schwenken, angelenkt oder wenigstens abgestützt.

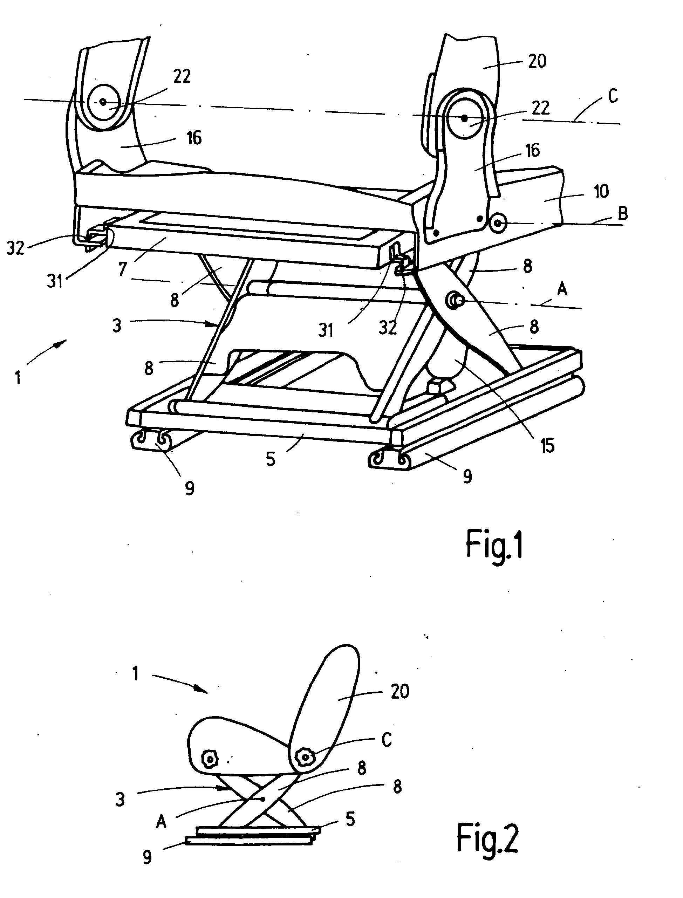

Im folgenden ist die Erfindung anhand zweier in der Zeichnung dargestellter Ausführungsbeispiele näher erläutert. Es zeigen
- Fig. 1: eine perspektivische Teilansicht des ungepolsterten ersten Ausführungsbeispiels,
- Fig. 2: eine für beide Ausführungsbeispiele gleiche schematische Seitenansicht,

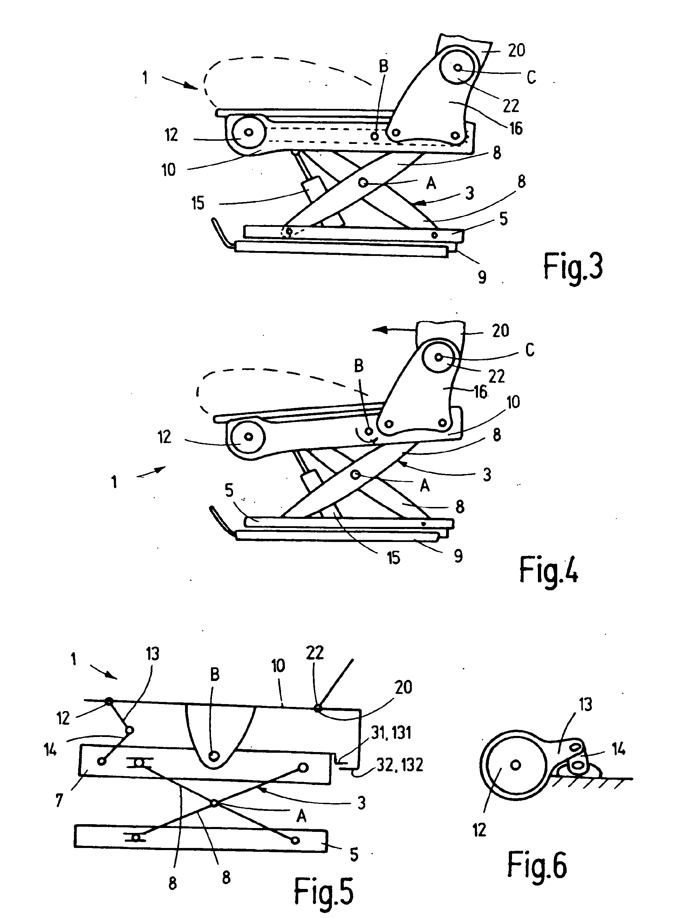

- Fig. 3: eine für beide Ausführungsbeispiele gleiche Seitenansicht in einem Normalfall bei einem Neigungswinkel von 0° zwischen Sitzrahmen und Scherengestell,
- Fig. 4: eine Fig. 3 entsprechende Seitenansicht in einem Crashfall,
- Fig. 5: eine für beide Ausführungsbeispiele gleiche schematische Darstellung des Funktionsprinzips,
- Fig. 6: eine Teilansicht des Dreigelenks,

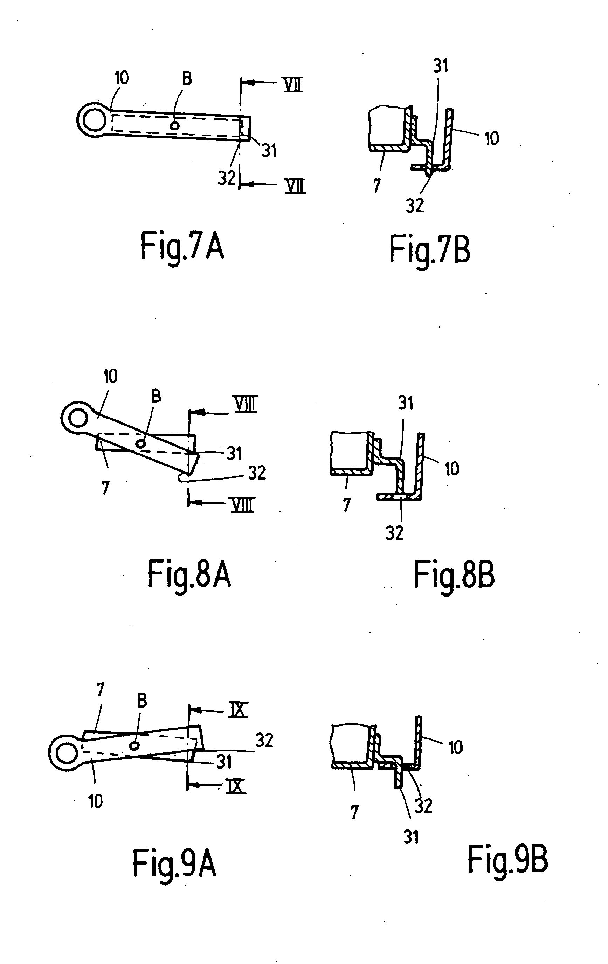

- Fig. 7A: eine Teilansicht des ersten Ausführungsbeispiels bei einem Neigungswinkel von 0° zwischen Sitzrahmen und Scherengestell,
- Fig. 7B: einen Schnitt entlang der Linie VII-VII in Fig. 7A,
- Fig. 8A: eine Teilansicht des ersten Ausführungsbeispiels bei einem nach oben geneigten Sitzrahmen,
- Fig. 8B: einen Schnitt entlang der Linie VIII-VIII in Fig. 8A,
- Fig. 9A: eine Teilansicht des ersten Ausführungsbeispiels bei einem nach unten geneigten Sitzrahmen, was im Falle eines Frontcrashs auftritt,
- Fig. 9B: einen Schnitt entlang der Linie IX-IX in Fig. 9A,

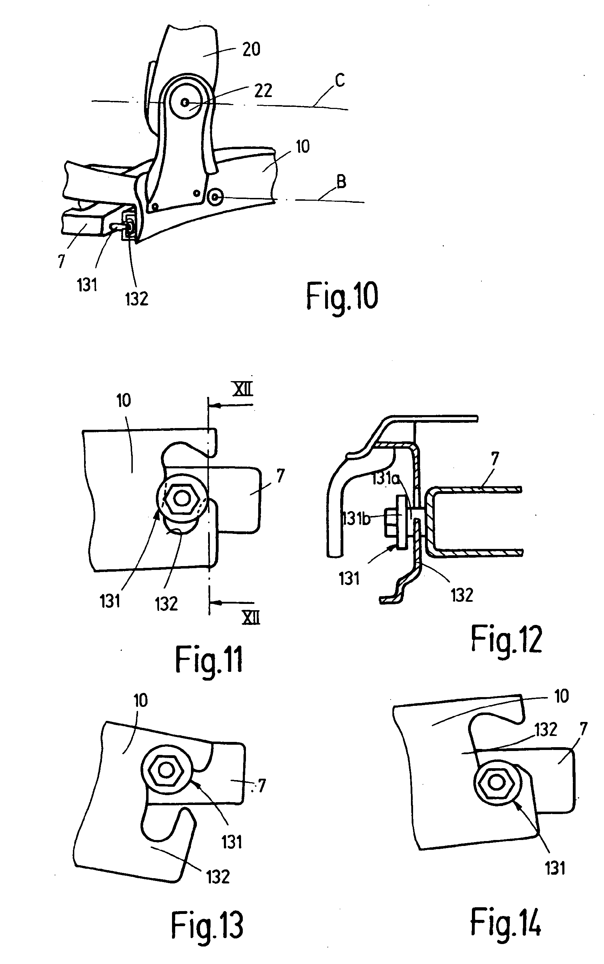

- Fig. 10: eine perspektivische Teilansicht des ungepolsterten zweiten Ausführungsbeispiels in dem sich von Fig. 1 unterscheidenden Bereich,
- Fig. 11: eine Teilansicht des zweiten Ausführungsbeispiels bei einem Neigungswinkel von 0° zwischen Sitzrahmen und Scherengestell entsprechend der Situation in Fig. 7A,
- Fig. 12: einen Schnitt entlang der Linie XII-XII in Fig. 11,
- Fig. 13: eine Teilansicht des zweiten Ausführungsbeispiels bei einem nach oben geneigten Sitzrahmen entsprechend der Situation in Fig. 8A, und
- Fig. 14: eine Teilansicht des zweiten Ausführungsbeispiels bei einem nach unten geneigten Sitzrahmen, was im Falle eines Frontcrashs auftritt, entsprechend der Situation in Fig. 9A.

In beiden Ausführungsbeispielen weist ein Fahrzeugsitz 1 für ein Nutzfahrzeug oder ein anderes Kraftfahrzeug ein Scherengestell 3 auf, welches einen Unterrahmen 5, einen oberhalb desselben angeordneten Oberrrahmen 7 und beidseitig je ein Paar gekreuzter Schwingen 8 umfasst. Eine Scherenachse A verbindet die beiden Kreuzungspunkte und definiert zugleich die Achse, um welche die Schwingen 8 relativ zueinander schwenken können. Die Schwingen 8 sind jeweils an ihrem hinteren Ende am Unterrahmen 5 bzw. am Oberrahmen 7 angelenkt und weisen jeweils an ihrem vorderen Ende drehbare Rollen auf, mittels denen sie im oder am Oberrahmen 7 bzw. Unterrahmen 5 in Sitzlängsrichtung beweglich geführt sind. Durch diese Bewegung der Schwingen 8 wird die Höhe des Oberrahmens 7 über dem Unterrahmen 5 eingestellt. Das Scherengestell 3 ist vorliegend mittels Sitzschienen 9, die am Unterrahmen 5 befestigt sind, in Sitzlängsrichtung verschiebbar, womit der Fahrzeugsitz 1 längseinstellbar ist, d.h. seine Sitzlängsposition einstellbar ist.

Der Fahrzeugsitz 1 weist ferner einen Sitzrahmen 10 auf, welcher - um eine horizontale Sitzrahmen-Schwenkachse B relativ zum Scherengestell 3 schwenkbar - am Oberrahmen 7 beidseitig angelenkt ist. Vorliegend ist diese Sitzrahmen-Schwenkachse B - in Sitzlängsrichtung gesehen - etwas hinter der Mitte des Sitzrahmens 10 angeordnet. Am vorderen Ende des Sitzrahmens 10 ist wenigstens auf einer Fahrzeugsitzseite ein Neigungseinstellbeschlag 12 vorgesehen. Auf der anderen Fahrzeugsitzseite ist damit fluchtend ein Gelenk oder ein weiterer Neigungseinstellbeschlag 12 gleicher Bauart vorgesehen. Der Neigungseinstellbeschlag 12 weist zwei relativ zueinander verdrehbare Beschlagteile auf, die miteinander verriegelbar sind (Rastbeschlag) oder miteinander in Getriebeverbindung stehen (Getriebebeschlag), beispielsweise mittels eines selbsthemmenden Exzenterumlaufgetriebes. Derartige Neigungseinstellbeschläge 12 sind an sich für die Einstellung der Lehnenneigung bekannt. Vorzugsweise bildet der Neigungseinstellbeschlag 12 in baulicher Hinsicht eine scheibenförmige Einheit.

Eines der beiden Beschlagteile des Neigungseinstellbeschlags 12 ist fest mit dem Sitzrahmen 10 verbunden, während am anderen Beschlagteil oder einem damit fest verbundenen oder angeformten Hebel 13 ein Lenker 14 mit einem Ende angelenkt ist. Der Lenker 14 ist mit seinem anderen Ende am Oberrahmen 7 angelenkt. Dadurch definieren der Neigungseinstellbeschlag 12 und der Lenker 14 mit seinen Anlenkstellen ein Dreigelenk. Sofern auf der anderen Fahrzeugsitzseite ein mit dem Neigungseinstellbeschlag 12 fluchtendes Gelenk zwischen dem Sitzrahmen 12 und einem Hebel vorgesehen ist, ist ein weiterer Lenker 14 gleicher Bauart einerseits an besagtem Hebel und andererseits am Oberrahmen 7 angelenkt. Sofern auf der anderen Fahrzeugsitzseite ein weiterer Neigungseinstellbeschlag 12 vorgesehen ist, ist in gleicher Weise der weitere Lenker 14 einerseits am Neigungseinstellbeschlag 12 und anderseits am Oberrahmen 7 angelenkt. In beiden Fällen ist somit beidseitig ein Dreigelenk zwischen Sitzrahmen 10 und Oberrahmen 7 vorgesehen.

Mittels des oder der Neigungseinstellbeschläge 12 und der Dreigelenke ist die Neigung des Sitzrahmens 10 relativ zum Oberrahmen 7 und damit zum Scherengestell 3 einstellbar. Der Sitzrahmen 10 trägt in an sich bekannter Weise ein Sitzschale mit einem Sitzpolster. Mittels einer Feder 15, vorzugsweise einer Gasfeder, und vorzugsweise einem Dämpfer wird das Scherengestell 3 ein schwingfähiges System, welches den Sitzkomfort erhöht.

Am Sitzrahmen 10 ist am hinteren Ende beidseitig je ein Lehnenadapter 16 befestigt. Eine Lehne 20 ist mittels beidseitig vorgesehenen Lehnenbeschlägen 22 an den Lehnenadaptem 16 um eine Lehnen-Schwenkachse C schwenkbar angebracht. Die Lehne 20 kann in abgewandelter Ausführung mittels der Lehnenschläge 22 direkt am Sitzrahmen 10 um die Lehnen-Schwenkachse C schwenkbar angebracht sein. In einer weiteren Abwandlung ist nur auf einer Fahrzeugsitzseite ein Lehnenbeschlag 22 und auf der anderen Fahrzeugsitzseite ein Gelenk vorgesehen.

Die Lehnenbeschläge 22 können wie die Neigungseinstellbeschläge 12 als Rastbeschläge oder Getriebebeschläge, vorzugsweise mit einem selbsthemmenden Exzenterumlaufgetriebe, ausgebildet und in baulicher Hinsicht vorzugsweise ebenfalls eine scheibenförmige Einheit bilden. Die Lehne 20 ist mittels der Lehnenbeschläge 22 relativ zum Sitzrahmen 10 schwenkbar und in ihrer Neigung einstellbar. Die Lehne 20 ist in an sich bekannter Weise gepolstert.

Insoweit stimmen die beiden Ausführungsbeispiele überein.

Im ersten Ausführungsbeispiel ist am hinteren Ende des Oberrahmens 7 - vorliegend jeweils auf beiden Fahrzeugsitzseiten - ein erstes Fangelement 31 vorgesehen, welches vorliegend als ein Fanghaken mit doppelter Abkröpfung ausgebildet ist. Am hinteren Ende des Sitzrahmens 10 ist zum Zusammenwirken mit jedem vorgesehenen ersten Fangelement 31 jeweils ein zweites Fangelement 32 vorgesehen. Hierzu ist im Material des Sitzrahmens 10 ein Langloch ausgebildet, welches sich in Sitzlängsrichtung erstreckt. Als Fangelement 32 dient vorliegend der das Langloch berandende Randbereich des Sitzrahmens 10, insbesondere der Randbereich an der dem Oberrahmen 7 zugewandten Längsseite des Langlochs. Die Fangelemente 31 und 32 sind von der Anlenkstelle des Sitzrahmens 10 am Oberrahmen 7 beabstandet. Die beiden Fangelemente 31 und 32 auf jeder Fahrzeugsitzseite sind voneinander beabstandet so angeordnet, dass sie im Normalfall nicht zusammenwirken. Jedoch ist ein Anschnäbeln oder dergleichen möglich. So kann vorliegend der Fanghaken als erstes Fangelement 31 in das berandete Langloch als zweites Fangelement 32 eintauchen, ohne dass die doppelte Abkröpfung am Material der Berandung des Langlochs anliegt.

Im zweiten Ausführungsbeispiel ist am hinteren Ende des Oberrahmens 7 - vorliegend jeweils auf beiden Fahrzeugsitzseiten - ein erstes Fangelement 131 vorgesehen. Das erste Fangelement 131 ist vorliegend als ein Bolzen 131a, der parallel zur Sitzrahmen-Schwenkachse B vom Oberrahmen 7 absteht, mit einer stirnseitig angeschraubten Scheibe als Seitensicherung 131b ausgebildet ist. Am hinteren Ende des Sitzrahmens 10 ist zum Zusammenwirken mit jedem vorgesehenen ersten Fangelement 131 jeweils ein zweites Fangelement 132 vorgesehen. Hierzu ist im Material des Sitzrahmens 10 ein Langloch ausgebildet, welches sich in einer vertikalen Richtung erstreckt und an der in Sitzlängsrichtung hinteren Längsseite teilweise offen ist. Als Fangelement 132 dient vorliegend der das Langloch berandende Randbereich des Sitzrahmens 10, insbesondere der Randbereich am unteren Ende des Langlochs. Die Fangelemente 131 und 132 sind von der Anlenkstelle des Sitzrahmens 10 am Oberrahmen 7 beabstandet. Die beiden Fangelemente 131 und 132 auf jeder Fahrzeugsitzseite sind voneinander beabstandet so angeordnet, dass sie im Normalfall nicht zusammenwirken, d.h. weder der Bolzen 131a noch die Seitensicherung 131b den Sitzrahmen 10 kontaktieren. Jedoch ragt der Bolzen 131a durch das Langloch.

Die Grundfunktion der Fangelemente 31, 32, 131, 132 ist bei beiden Ausführungsbeispielen gleich. Im Falle eines Frontcrashs oder starken Missbrauchs, wenn an der Lehne 20 eine Kraft nach vorne angreift, greift mittels der Lehne 20 ein im Sinne einer Schwenkbewegung nach vorne wirkendes Drehmoment um die Sitzrahmen-Schwenkachse B an dem an der Lehne 20 angebrachten Sitzrahmen 10 an. Dadurch bewegt sich der am Oberrahmen 7 an der Sitzrahmen-Schwenkachse B angelenkte Sitzrahmen 10 tendenziell an seinem vorderen Ende nach unten und an seinem hinteren Ende nach oben. Dadurch nähert sich das zweite Fangelement 32 bzw. 132 dem ersten Fangelement 31 bzw. 131 und kommt - vorliegend bei etwa 4° gegenüber der Horizontalen nach unten - in Anlage an das erste Fangelement 31 bzw. 131, d.h. die beiden Fangelemente 31 und 32 bzw. 131 und 132 wirken im Crashfall oder dergleichen zusammen, genauer gesagt in einer vertikalen Richtung. Durch dieses Zusammenwirken und den weiteren Weg für den Kraftfluss erfolgt eine bessere Lastübertragung vom Sitzrahmen 10 an das Scherengestell 3.

Beim zweiten Ausführungsbeispiel hat das erste Fangelement 131 noch eine Zusatzfunktion. Im Crashfall kann es sein, dass der Sitzrahmen 10 sich entlang der Sitzrahmen-Schwenkachse B spreizt, d.h. seine in Sitzlängsrichtung verlaufenden Schenkel sich in dieser Richtung auseinander bewegen. Dann kommt das zweite Fangelement 132, also der das untere Ende des Langlochs berandende Randbereich des Sitzrahmens 10, nicht nur in Anlage an den Bolzen 131a, sondern auch in Anlage an die Seitensicherung 131b. Somit wirken die beiden Fangelemente 131 und 132 zusätzlich seitlich zur Hauptrichtung des Kraftflusses zusammen. Im Falle, dass der Sitzrahmen 10 entlang der Sitzrahmen-Schwenkachse B gestaucht wird, d.h. seine in Sitzlängsrichtung verlaufenden Schenkel sich in dieser Richtung aufeinander zu bewegen, kommt das zweite Fangelement 132 in Anlage an den Oberrahmen 7. In beiden Fällen ist gewährleistet, dass unabhängig von der Bewegung des Sitzrahmens 10 die beiden Fangelemente 131 und 132 in Nachbarschaft zueinander angeordnet bleiben, um zusammenwirken zu können.

### Bezugszeichenliste

- 1: Fahrzeugsitz
- 3: Scherengestell
- 5: Unterrahmen
- 7: Oberrahmen
- 8: Schwinge
- 9: Sitzschiene
- 10: Sitzrahmen
- 12: Neigungseinstellbeschlag
- 13: Hebel
- 14: Lenker
- 15: Feder
- 16: Lehnenadapter
- 20: Lehne
- 22: Lehnenbeschlag
- 31, 131: erstes Fangelement
- 32, 132: zweites Fangelement
- 131a: Bolzen
- 131b: Seitensicherung
- A: Scherenachse
- B: Sitzrahmen-Schwenkachse
- C: Lehnen-Schwenkachse

## Patentansprüche

1. Fahrzeugsitz, insbesondere Nutzfahrzeugsitz, mit einem Scherengestell (3), einem daran mit einer Schwenkachse (B) angelenkten Sitzrahmen (10) und einer Lehne (20), welche am Sitzrahmen (10) angebracht ist und mittels welcher in einem Crashfall oder Missbrauchsfall ein Drehmoment am Sitzrahmen (10) angreift, **dadurch gekennzeichnet, dass** das Scherengestell (3) ein erstes Fangelement (31; 131) und der Sitzrahmen (10) ein zweites Fangelement (32; 132) aufweist, welche im Normalfall voneinander beabstandet ohne Zusammenwirkung sind und in einem Crashfall oder Missbrauchsfall einander nähern und dann zusammenwirken unter Schaffung eines weiteren Weges für den Kraftfluss, wobei im Material des Sitzrahmens (10) oder des Scherengestells (3) ein Langloch, oder eine sonstige Öffnung oder Aufnahme ausgebildet ist, wobei der das Langloch bzw. die Öffnung oder Aufnahme berandende Randbereich des Sitzrahmens (10) oder des Scherengestells (3) als Fangelement (31, 32; 131, 132), insbesondere als zweites Fangelement (32; 132) dient.

2. Fahrzeugsitz nach Anspruch 1, **dadurch gekennzeichnet, dass** der Sitzrahmen (10) in seiner Neigung relativ zum Scherengestell (3) einstellbar ist mittels eines Lineareinstellers oder eines einen Neigungseinstellbeschlag (12) aufweisenden Getriebes.

3. Fahrzeugsitz nach Anspruch 1 oder 2, **dadurch gekennzeichnet, dass** der Sitzrahmen (10) einerseits direkt am Scherengestell (3) angelenkt ist und andererseits mittels wenigstens eines Dreigelenks mit dem Scherengestell (3) gelenkig verbunden ist.

4. Fahrzeugsitz nach Anspruch 2 und 3, **dadurch gekennzeichnet, dass** im Dreigelenk wenigstens ein Neigungseinstellbeschlag (12) vorgesehen ist, welcher zwischen einerseits dem Sitzrahmen (10) oder dem Scherengestell (3) und andererseits einem Lenker (14) des Dreigelenks wirksam ist.

5. Fahrzeugsitz nach einem der vorhergehenden Ansprüche, **dadurch gekennzeichnet, dass** die Lehne (20) mittels wenigstens eines Lehnenbeschlags (22) am Sitzrahmen (10) oder an am Sitzrahmen (10) befestigten Lehnenadaptem (16) schwenkbar angebracht ist.

6. Fahrzeugsitz nach Anspruch 2 und 5, **dadurch gekennzeichnet, dass** der Neigungseinstellbeschlag (12) und/oder der Lehnenbeschlag (22) in baulicher Hinsicht eine scheibenförmige Einheit bilden und/oder dass der Neigungseinstellbeschlag (12) und/oder der Lehnenbeschlag (22) als Rastbeschlag oder als Getriebebeschlag, insbesondere mit einem selbsthemmenden Exzenterumlaufgetriebe, ausgebildet sind.

7. Fahrzeugsitz nach einem der vorhergehenden Ansprüche, **dadurch gekennzeichnet, dass** das als Scherengestell ausgebildete Scherengestell (3) einen Unterrahmen (5), einen oberhalb davon angeordneten Oberrahmen (7) und wenigstens ein Paar gekreuzter Schwingen (8) aufweist, mittels welcher die Höhe des Oberrahmens (7) über dem Unterrrahmen (5) einstellbar ist.

8. Fahrzeugsitz nach einem der vorhergehenden Ansprüche, **dadurch gekennzeichnet, dass** im Crashfall die beiden Fangelemente (131, 132) zusätzlich seitlich zur Hauptrichtung des Kraftflusses zusammenwirken.

9. Fahrzeugsitz nach einem der vorhergehenden Ansprüche, **dadurch gekennzeichnet, dass** im Crashfall wenigstens eines der beiden Fangelemente (31, 32; 131, 132) seitlich zur Hauptrichtung des Kraftflusses mit dem dem anderen Fangelement (31, 32; 131, 132) zugeordneten Rahmen (7, 10) oder Scherengestell (3) zusammenwirkt.

10. Fahrzeugsitz nach einem der vorhergehenden Ansprüche, **dadurch gekennzeichnet, dass** wenigstens eines der beiden Fangelemente (131, 132) eine Seitensicherung (131b) aufweist, welche insbesondere seitlich zur Hauptrichtung des Kraftflusses wirksam wird.

11. Fahrzeugsitz nach einem der vorhergehenden Ansprüche, **dadurch gekennzeichnet, dass** wenigstens eines der beiden Fangelemente (31, 32; 131, 132), insbesondere das erste Fangelement (31; 131), als ein Fanghaken, insbesondere mit einer doppelten Abkröpfung, oder als ein Bolzen (131a) ausgebildet ist oder einen solchen aufweist.

12. Fahrzeugsitz nach einem der vorhergehenden Ansprüche, **dadurch gekennzeichnet, dass** die Fangelemente (31, 32; 131, 132) von der Anlenkstelle des Sitzrahmens (10) am Scherengestell (3) beabstandet vorgesehen sind, insbesondere indem die Schwenkachse (B) in Sitzlängsrichtung in der Mitte des Sitzrahmens (10) oder nahe derselben vorgesehen ist und die Fangelemente (31, 32; 131, 132) am hinteren Ende des Sitzrahmens (10) und des Scherengestells (3) vorgesehen sind.

## Claims

1. A vehicle seat, in particular commercial vehicle seat, with a scissor frame (3), a seat frame (10) hinged on it with a rotation axis (B) and a backrest (20), which is attached to the seat frame (10) and by means of which a torque affects the seat frame (10) in the event of a crash or misuse, **characterized in that** the scissor frame (3) has a first catch element (31; 131) and the seat frame (10) a second catch element (32; 132), which are normally spaced apart without interaction and approach each other in the event of a crash or misuse and then interact under creation of another path for the power flow, wherein a long hole or another opening or receiver is designed in the material of the seat frame (10) or the scissor frame (3), wherein the edge area of the seat frame (10) or the scissor frame (3) bordering the long hole or respectively the opening or receiver serves as catch element (31, 32; 131, 132), in particular as the second catch element (32; 132).

2. The vehicle seat according to claim 1, **characterized in that** the seat frame (10) is adjustable in its inclination relative to the scissor frame (3) by means of a linear adjustor or a gearbox having an incline adjustment fitting (12).

3. The vehicle seat according to claim 1 or 2, **characterized in that** the seat frame (10) is hinged directly on the scissor frame (3) on one side and articulated with the scissor frame (3) by means of at least one triple joint on the other side.

4. The vehicle seat according to claim 2 and 3, **characterized in that** at least one incline adjustment fitting (12) is provided in the triple joint, which is effective between the seat frame (10) or the scissor frame (3) on one side and a control lever (14) of the triple joint on the other side.

5. The vehicle seat according to any one of the preceding claims, **characterized in that** the backrest (20) is swivel mounted on the seat frame (10) or on backrest adapters (16) fastened on the seat frame (10) by means of at least one backrest fitting (22).

6. The vehicle seat according to claim 2 and 5, **characterized in that** the incline adjustment fitting (12) and/or the backrest fitting (22) form a disk-shaped unit from a structural point of view and/or that the incline adjustment fitting (12) and/or the backrest fitting (22) are designed as an adjustable fitting or as a gearbox fitting, in particular with a self-locking eccentric planetary gear.

7. The vehicle seat according to any one of the preceding claims, **characterized in that** the scissor frame (3) designed as a scissor frame has a bottom frame (5), a top frame (7) arranged above it and at least one pair of crossed rockers (8), by means of which the height of the top frame (7) above the bottom frame (5) is adjustable.

8. The vehicle seat according to any one of the preceding claims, **characterized in that** in the event of a crash the two catch elements (131, 132) also interact laterally to the main direction of power flow.

9. The vehicle seat according to any one of the preceding claims, **characterized in that** in the event of a crash at least one of the two catch elements (31, 32; 131, 132) interacts with the frame (7, 10) or scissor frame (3) allocated to the other catch element (31, 32; 131, 132) laterally to the main direction of power flow.

10. The vehicle seat according to any one of the preceding claims, **characterized in that** at least one of the two catch elements (131, 132) has a side lock (131b), which is effective in particular laterally to the main direction of power flow.

11. The vehicle seat according to any one of the preceding claims, **characterized in that** at least one of the two catch elements (31, 32; 131, 132), in particular the first catch element (31; 131), is designed as a catch hook, in particular with a double bend, or as a bolt (131a) or has said element.

12. The vehicle seat according to any one of the preceding claims, **characterized in that** the catch elements (31, 32; 131, 132) are provided spaced from the pivot point of the seat frame (10) on the scissor frame (3), in particular **in that** the rotation axis (B) is provided in the longitudinal seat direction in the middle of the seat frame (10) or near it and the catch elements (31, 32; 131, 132) are provided on the rear end of the seat frame (10) and of the scissor frame (3).

## Revendications

1. Siège de véhicule, en particulier siège de véhicule utilitaire, avec un châssis en ciseaux (3), un cadre de siège (10) qui y est articulé avec un axe de pivotement (B) et un dossier (20) qui est mis en place sur le cadre de siège (10) et au moyen duquel un couple agit sur le cadre de siège (10) en cas de collision ou en cas de mauvais usage, **caractérisé en ce que** le châssis en ciseaux (3) présente un premier élément d'arrêt (31 ; 131) et **en ce que** le cadre de siège (10) présente un deuxième élément d'arrêt (32 ; 132) qui sont normalement distants l'un de l'autre et n'entretiennent aucune interaction et qui, en cas de collision ou en cas de mauvais usage, se rapprochent l'un de l'autre et coopèrent ensuite avec création d'un autre chemin pour le flux des forces, un trou oblong, ou une autre ouverture ou un autre logement étant constitué(e) dans le matériau du cadre de siège (10) ou du châssis en ciseaux (3), la zone marginale du cadre de siège (10) ou du châssis en ciseaux (3) qui borde le trou oblong ou l'ouverture ou le logement servant d'élément d'arrêt (31, 32 ; 131, 132), servant en particulier de deuxième élément d'arrêt (32 ; 132).

2. Siège de véhicule selon la revendication 1, **caractérisé en ce que** l'inclinaison du cadre de siège (10) par rapport au châssis en ciseaux (3) est réglable au moyen d'un dispositif de réglage linéaire ou d'un mécanisme présentant une ferrure de réglage d'inclinaison (12).

3. Siège de véhicule selon la revendication 1 ou 2, **caractérisé en ce que** le cadre de siège (10) est sur un côté articulé directement sur le châssis en ciseaux (3) et sur autre côté raccordé de façon articulée avec le châssis en ciseaux (3) au moyen au moins d'une triple articulation.

4. Siège de véhicule selon les revendications 2 et 3, **caractérisé en ce que**, dans la triple articulation, il est prévu au moins une ferrure de réglage d'inclinaison (12) qui est active entre le cadre de siège (10) ou le châssis en ciseaux (3) sur un côté et une bielle (14) de la triple articulation sur autre côté.

5. Siège de véhicule selon une des revendications précédentes, **caractérisé en ce que** le dossier (20) est mis en place de façon pivotante, au moyen d'au moins une ferrure de dossier (22), sur le cadre de siège (10) ou sur des adaptateurs de dossier (16) fixés sur le cadre de siège (10).

6. Siège de véhicule selon les revendications 2 et 5, **caractérisé en ce que** la ferrure de réglage d'inclinaison (12) et/ou la ferrure de dossier (22) forment, au point de vue constructif, une unité en forme de disque et/ou **en ce que** la ferrure de réglage d'inclinaison (12) et/ou la ferrure de dossier (22) sont réalisées en tant que ferrure d'enclenchement ou en tant que ferrure de mécanisme, en particulier avec un mécanisme planétaire à excentrique autobloquant.

7. Siège de véhicule selon une des revendications précédentes, **caractérisé en ce que** le châssis en ciseaux (3) réalisé en tant que châssis en ciseaux présente un cadre inférieur (5), un cadre supérieur (7) placé au-dessus du précédent et au moins une paire de bras oscillants (8) croisés permettant de régler la hauteur du cadre supérieur (7) au-dessus du cadre inférieur (5).

8. Siège de véhicule selon une des revendications précédentes, **caractérisé en ce que**, en cas de collision, les deux éléments d'arrêt (131, 132) coopèrent en plus latéralement par rapport à la direction principale du flux des forces.

9. Siège de véhicule selon une des revendications précédentes, **caractérisé en ce que**, en cas de collision, au moins un des deux éléments d'arrêt (31, 32 ; 131, 132) coopère, latéralement par rapport à la direction principale du flux des forces, avec le cadre (7, 10) ou châssis en ciseaux (3) affecté à l'autre élément d'arrêt (31, 32 ; 131, 132).

10. Siège de véhicule selon une des revendications précédentes, **caractérisé en ce qu'**au moins un des deux éléments d'arrêt (131, 132) présente une sécurité latérale (131b) qui est active en particulier latéralement par rapport à la direction principale du flux des forces.

11. Siège de véhicule selon une des revendications précédentes, **caractérisé en ce qu'**au moins un des deux éléments d'arrêt (31, 32 ; 131, 132), en particulier le premier élément d'arrêt (31 ; 131), est réalisé en tant que crochet d'arrêt, en particulier avec un double coude, ou en tant que boulon (131a) ou bien présente un tel élément.

12. Siège de véhicule selon une des revendications précédentes, **caractérisé en ce que** les éléments d'arrêt (31, 32 ; 131, 132) sont prévus à distance du point d'articulation du cadre de siège (10) sur le châssis en ciseaux (3), en particulier par le fait que l'axe de pivotement (B) est prévu dans la direction longitudinale du siège au milieu du cadre de siège (10) ou à proximité de celui-ci, et par le fait que les éléments d'arrêt (31, 32 ; 131, 132) sont prévus à l'extrémité arrière du cadre de siège (10) et du châssis en ciseaux (3).
